# EUROPEAN PATENT SPECIFICATION

(11) **EP 4 311 978 B1**
(45) Date of publication and mention of the grant of the patent: **28.01.2026**
(21) Application number: 22187661.8
(22) Date of filing: 28.07.2022
(51) Int. Cl.: B60K 35/231, B60K 35/234, B60Q 1/26, G02B 27/01, F21V 8/00

(54) **DISPLAY**
ANZEIGE
AFFICHEUR

(43) Date of publication of application: 31.01.2024
(73) Proprietor: Valeo Comfort and Driving Assistance, 94000 Créteil (FR)
(72) Inventor: KULKARNI, Vishal, 94000 Créteil (FR); SRIRAMULA, Vara Prasad, 94000 Créteil (FR); YEPREMIAN, Hayk, 94000 Créteil (FR)
(74) Representative: Delplanque, Arnaud

(56) References cited:
- CA-A1- 2 119 962
- US-A1- 2008 129 206
- US-A1- 2015 116 192
- US-A1- 2019 066 548

## Description

### BACKGROUND INFORMATION AND PRIOR ART

Numerous documents describe head-up displays for vehicles. These displays allow showing information useful for the driver (speed, status of traffic, etc.) directly in his field of view. Therefore, they improve the overall safety and security since the driver does not need to look away from the road to access this information.

In such a display, an image representative of the information to be displayed is produced by an image generation unit. This image is then projected on a partially transparent plate located in front of the driver in order to form, from the point of view of the driver, a virtual image superposed to the environment facing the vehicle.

In order for the virtual image to be properly viewed, the brightness or luminosity of the image produced by the image generation unit classically depends on the luminosity of the environment, i.e. on ambient light. To this end, the display usually comprises a light sensor mounted on a dedicated printed circuit board which is located close to an outer surface of the display in order to efficiently collect external light. A short extended light guide may be installed to enhance light collection. The electrical signal provided by the light sensor is then conducted by a wire to a main printed circuit board onto which a control unit, configured to operate the image generation unit, is mounted. The brightness is then determined as a function of this electrical signal repetitive of ambient light.

However, implementing this light sensor reduces the compactness of the display and makes it more complex to integrate into the dashboard of the vehicle.

US 2015/116192 discloses a display device capable of adjusting display brightness of a light-emitting display in accordance with ambient luminance.

### SUMMARY OF THE INVENTION

The object of the invention is to provide a display according to the appended claims.

Thanks to the display according to the invention, the light sensor is located directly on the main printed circuit board. A printed circuit board dedicated to the light sensor is therefore not necessary, which reduces the complexity of the display. Advantageously, even though the light sensor might be far from the outer surface of the display, external light (representative the luminosity of the environment) is brought to the light sensor by the light pipe which requires little space. The display according to the invention can therefore be compact.

Moreover, the display according to the invention also requires less steps to be assembled within the vehicle.

According to the claimed invention, the light pipe is flexible. Thanks to the flexibility of the light pipe, the location of the external light collection area, or the position of the light pipe itself, can be easily modified with respect to the display. The display according to the invention can therefore be designed such as to provide several configurations, in particular of the location of the external light collection area, for a given position of the main printed circuit board. The display can thus easily be adapted to take into account spatial constraints imposed by the vehicle in which it is to be mounted. From another perspective, the display can be designed such as to fit various vehicles.

Consequently, the installation of the display within the vehicle is simple.

Other advantageous and non-limiting features of the display according to the invention are:
- the light pipe presents a longitudinal extension and cross-sections perpendicular to the longitudinal extension, and wherein each cross-section presents a surface comprised between 20 mm² and 50 mm²;
- the display further comprises a casing provided with an opening, the image generation unit being located inside the casing, the light pipe comprising an inlet adapted to collect the light radiation and an outlet opposed to the inlet and facing the light sensor, the inlet being arranged in the vicinity of the opening;
- the casing comprises an outer surface and the outer surface at least partially defines an edge of the opening;
- the casing comprises an optical chamber extending from the outer surface to the image generation unit for the passage of light emitted by the image generation unit, and the opening opens out into the optical chamber;
- the display further comprises holding means arranged in the casing and configured to removably maintain the light pipe with respect to the casing;
- the display, further comprises a holder mounted on the main printed circuit board and configured to removably maintain the light pipe in front of the light sensor;
- the display further comprises a partially transparent plate configured to reflect light emitted by the image generation unit towards a user;
- the partially transparent plate is a windshield of an automotive vehicle.

### DETAILED DESCRIPTION OF EXAMPLE(S)

The following description, enriched with joint drawings that should be taken as non-limitative examples, will help understand the invention and figure out how it can be realized.

In the accompanying drawings:
- Figure 1 is a cross-sectional view along two sections of a perspective representation of a display according to the invention;
- Figure 2 is a cross-sectional view of a perspective representation of several parts of the display of the figure 1;
- Figure 3 is a perspective representation of a main printed circuit board of the display of the figure 1.

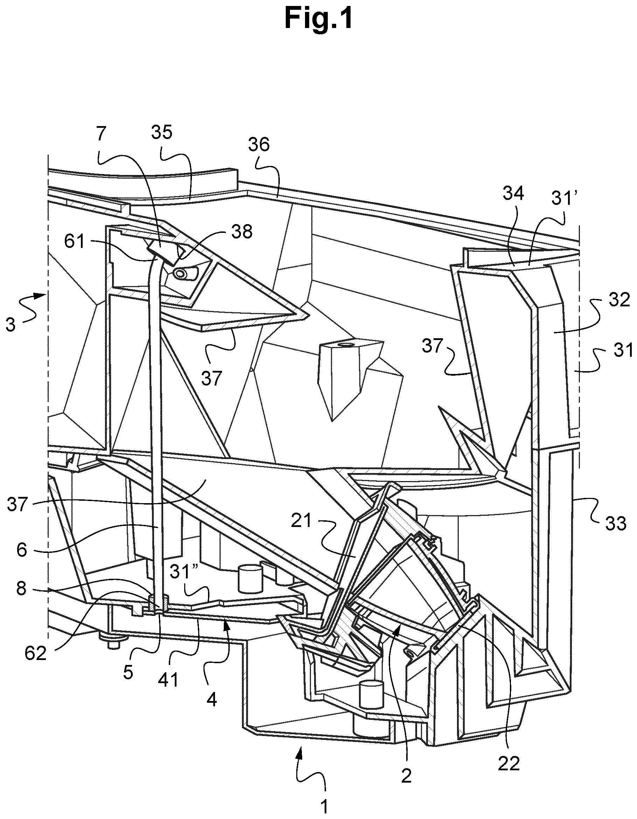

A display 1 according to the invention is represented in figure 1. The display 1 is here a head-up display intended to equip a vehicle and in particular an automotive vehicle. The display 1 is here adapted to be mounted in the dashboard of the vehicle, below its windshield.

The display 1 comprises an image generation unit 2 and a casing 3 housing the image generation unit 2.

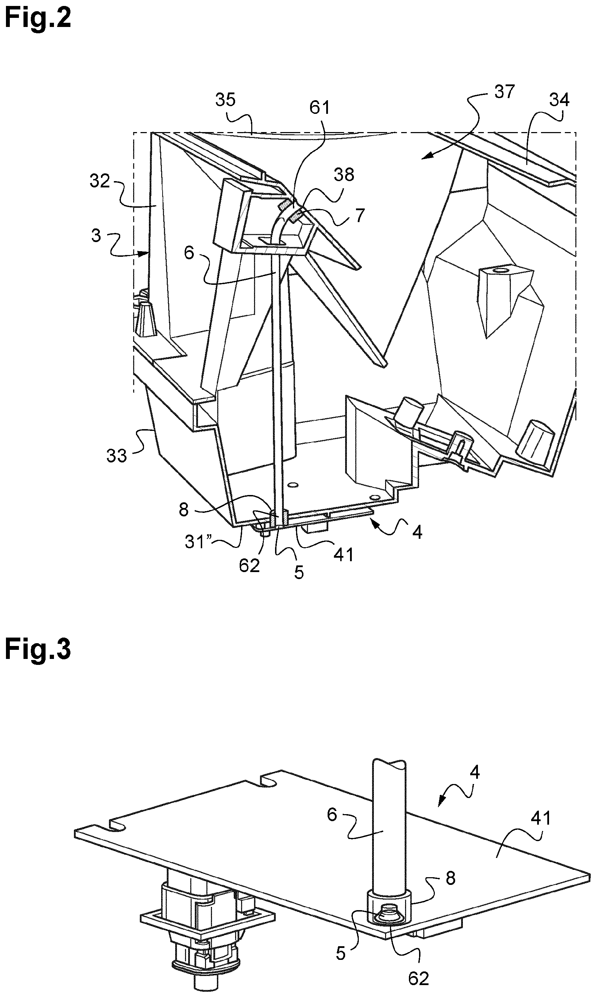

As shown in figures 2 and 3, the casing 3 is formed by a plurality of walls 31. The walls 31 are preferentially optically opaque and separate an inside of the casing 3 from an outside of the casing 3. The image generation unit 2 is located in the inside of the casing 3 and is therefore hidden for a user, from instance the drive of the vehicle.

The casing 3 more particularly comprises an upper part 32 and a lower part 33 located under the upper part 32 when the display 1 is installed in the vehicle. The upper part 33 of the casing 3 also comprises an outer surface 34 opposed to the lower part 33. The outer surface 34 delimits, in parts, the outside from the inside of the casing 3. Here, the outer surface 34 corresponds to a top surface of the display 1 when the display 1 is installed in the vehicle. The outer surface 34 is formed by a top wall 31' of the casing 3. The outer surface 34 therefore extends facing the windshield. The outer surface 34 may be seen by the user.

The casing 3 also comprises an aperture 35 allowing passage for the images produced by the image generating unit 2 from the inside to the outside of the casing 3. Here, the outer surface 34 defines an edge 36 of the aperture 35. In other words, the aperture 35 is here formed by a through-hole extending from the outer surface 34. A cover window may be positioned in the vicinity of the aperture 35 such as to close the casing 3, for instance in order to protect the image generation unit 2 against foreign bodies such as dust. Preferentially, the cover window does not affect the path of the light emitted by image generation unit 2.

As illustrated in figure 1, the image generation unit 2 comprises a screen 21 of which the optical transmission can be controlled and at least one light emitter, here a plurality of light emitters. The screen 21 is here a liquid crystal screen with thin-film transistors. Each light emitter is here a light emitting diode. The light emitters produce light so as to backlight the rear of the screen 21. The image generation unit 2 comprises an auxiliary printed circuit board 22 on which the light emitters are mounted. A first electrical circuit dedicated to power the light emitters is printed on the auxiliary printed circuit board 22. The image generation unit 2 here comprises a second electrical circuit adapted to power the screen 21.

A substrate of the auxiliary printed circuit board 22 is here made of an epoxy resin. The substrate of the auxiliary printed circuit board 22 is for instance an aluminum insulated metal substrate. The thickness of the auxiliary printed circuit board 22 is for instance comprises between 1 mm and 2 mm.

The display 1 also comprises a control unit 4 configured to control the image generation unit 2. The control unit 4 comprises for example at least one processor and at least one memory. The control unit 4 is in particular programmed to control the powering of the light emitters and the optical transmission of the screen 21 in order to produce a light beam representative of information to be displayed, i.e. transmitted, to the user. In other words, the control unit 4 is adapted to power and send instructions to the first electrical circuit and the second electrical circuit.

As shown in figure 2, the control unit 4 is mounted on a main printed circuit board 41. The main printed circuit board 41 is distinct from the auxiliary printed circuit board 22. The main printed circuit board 41 is fixed to the to the lower part 33 of the casing 3. Here, the main printed circuit board 41 is located outside of the casing 3 so that it is easier to connect it to the electronic control unit of the vehicle. As represented in figure 1, the main printed circuit board 41 is fixed below of a bottom wall 31" of the casing 3. As a variation, the main printed circuit board is housed inside the casing. Here, the main printed circuit board 41 also supports connection means to an electrical control unit of the vehicle and to the auxiliary printed circuit board 22. The second electrical circuit is for instance mounted on a flexible printed circuit board assembled on the main printed circuit board 41.

A substrate of the main printed circuit board 41 is here made of an epoxy resin. The substrate of the main printed circuit board 41 is for instance an aluminum insulated metal substrate. The thickness of the main printed circuit board 41 is for instance comprises between 1 mm and 2 mm.

The display 1 also comprises an optical projection assembly adapted to project the light beam produced by the image generation unit 2 toward a partially transparent plate. The partially transparent plate is configured to reflect the light beam, more specifically a portion of it, towards the user, which thus forms a virtual image in the field of view of the user. The partially transparent plate is located outside of the casing 3 such as to face the aperture 35. Thanks to the virtual image, the user, here the driver, can be aware of information (speed, directions, engine status) carried by the light beam without deviating his eyes from the road.

The partially transparent plate may be a combiner, that is to say a plate dedicated to reflecting the light beam, located between the windshield and the eyes of the user. Alternatively, the partially transparent plate may be the windshield itself, and more particularly a portion thereof.

The terms "upper" and "top" denotes elements of the display 1 that are located on the same side of the casing 3 as the partially transparent plate whereas the terms "lower" and "bottom" denotes elements located at the opposite of the partially transparent plate. When the display 1 is installed in the vehicle, the terms "upper" and "top" refer to elements of the display 1 that are located towards the top relatively to an upward vertical direction (as illustrated in the figures) and the terms "lower" and "bottom" refer to elements that are located towards the bottom relatively to the upward vertical direction.

The optical projection assembly comprises here one or more mirrors, such as fold mirrors positioned on the light path between image generation unit 2 and aperture 35. The optical projection assembly may also comprise other optical elements such as optical lenses. The optical assembly is designed to conduct the light beam to the partially transparent plate and also to shape the light beam, for example to enlarge it (for instance thanks to fold mirrors or lenses) so that the display 1 is compact but produces images large enough to be clearly seen by the user.

The optical assembly specifically guides the light beam produced by the image generation unit 2 through the aperture 35. More particularly, the upper part 32 of the casing 3 comprises an optical chamber 37 extending from the screen 21 of the image generation unit 2 to the outer surface 36. In other words, the optical chamber 37 forms a channel connecting the image generation unit 2 to the outside of the casing 3 and therefore allowing the light beam to reach the partially transparent plate.

As illustrated in figure 1, the optical chamber 37 is here Z-shaped. The image generation unit 2 and the aperture 35 are located at both ends of the Z-shape and fold mirrors are positioned at the two elbows of the Z-shape. As a variation, the channel may present other shapes, for instance, the optical chamber may extend along a straight line directly from the opening to the image generation unit.

As shown in figure 3, the display 1 also comprises a light sensor 5 mounted on the main printed circuit board 41. The light sensor 5 is adapted to deliver an electrical signal representing the light intensity it receives. The voltage of the electrical signal is for instance proportional to the light intensity received. The light sensor 5 is specifically adapted to provide this electrical signal to the control unit 4. The light sensor 5 being mounted together with the control unit 4 on the main printed circuit board 41, connecting the light sensor 5 and the control unit 4 is simple. Such a connection is preferentially printed on the main printed circuit board 41.

The light sensor 5 is disposed so as to receive a light radiation originating from outside of the display 1, i.e. from the outside of the casing 3, for instance from the cabin of the vehicle. The light radiation is here representative of an ambient light or ambient luminosity.

The control unit 4 is configured such that the luminosity, or the intensity, of the light beam produced by the image generation unit 2 is controlled as a function of the electrical signal provided by the light sensor 5. The luminosity of the light beam can thus be adapted to the ambient luminosity which ensures the visibility of the virtual image for the user, even when the ambient luminosity varies.

More specifically, the control unit 4 is configured such that the greater the electrical signal provided by the light sensor 5 is, the greater the luminosity of the light beam is. To control the luminosity of the light beam, the control unit 4 is configured to control the power provided to the light emitters. The greater the electrical signal provided by the light sensor 5 is, the greater power provided to the light emitters is.

In order for the light sensor 5 to receive the light radiation originating from outside of the display 1, the display 1 comprises a light guide 6 arranged to collect the light radiation and to guide it to the light sensor 5. The light guide 6 is more particularly a light pipe 6. Here, the light pipe 6 extends through the casing 3 from the upper part 31 of the casing 3 to the main printed circuit bord 41, as illustrated in figure 2. Advantageously, using a light pipe 6 requires little room to guide the light radiation to the light sensor 5.

The light pipe 6 comprises an inlet 61 adapted to collect the light radiation and an outlet 62 opposed to the inlet 61 and facing the light sensor 5. The outlet 62 and the inlet 61 are here opposite end surfaces of the light pipe 6. As shown in figure 3, the outlet 62 faces the light sensor 5, they are close or in contact with each other. After having been guided by the light pipe 6, the light radiation therefore exists from the outlet 62 to be received by the light sensor 5. The light radiation is guided from the inlet 61 to the outlet 62, in particular by complete internal reflection.

The casing 3 comprises an opening 38 traversed by the light radiation. The inlet 61 of the light pipe 6 is arranged in the vicinity of the opening 38. For instance, as shown in figure 2, the inlet 61 is flush with the opening 38. The inlet 61 may also go beyond the opening 38 toward the outside of the casing 3 or, conversely, be set back from the opening 8 toward the inside of the casing 3.

As represented in figures 1 and 2, the opening 38 is preferentially located close to the aperture 35 for an efficient collecting of the light radiation.

For instance, the opening 38 opens out into the optical chamber 37, as represented in figures 1 and 2. The opening 38 more specifically opens out in an upper region of the optical chamber 37 in the vicinity of the aperture 35.

The opening 38 may also extend from the outer surface 34. For example, the outer surface 34 may defines, at least partially, an edge of the opening 38. In this case, the opening 38 opens out directly to the outside of the casing 3, which allows the light pipe to be strongly exposed to ambient light.

The light pipe 6 has an elongated shape with an approximately even section. More specifically, the light pipe 6 presents a longitudinal extension corresponding to a mean path of the light radiation from the inlet 61 to the outlet 62. The light pipe 6 thus presents cross-sections perpendicular to the longitudinal extension, all cross-sections presenting substantiality equal surfaces. The surfaces of the cross-sections may in particular slightly differ when the light pipe 6 is bend or presents an elbow. Here, each cross-section has for instance a surface comprised between 20 mm² and 50 mm². The light pipe 6 therefore needs little room to be installed. The cross-sections may for instance be round-shaped, square-shaped, or hexagonal-shaped.

The light pipe 6 is flexible. This means that the light pipe 6 is manually bendable such that its shape can be adapted, in particular with respect to a fixed position of the inlet 61 or of the outlet 62, when assembling the display 1. The display 1 can therefore provide several configurations, for instance by presenting several openings. The light pipe 6 may then be placed in one of those openings depending on the configuration of the dashboard the display 1 is to be mounted in.

In a general manner, the shape of the light pipe 6 particularly depends on the respective positions of the opening 38 and of the main printed circuit bord 41. For instance, in the example illustrated in figures 1 and 2, the light pipe 6 is bent close to the opening 38 and then extends toward the main printed circuit bord 41 in a straight line. The light pipe 6 therefore allows redirecting the light radiation.

The light pipe 6 is made of a transparent material. For instance, the light pipe 6 is made of polycarbonate or poly(methyl methacrylate) and preferably of a resin based silicon.

The display 1 is particularly suited when the partially transparent plate is the windshield itself since such a head-up display required longer projections distances and the light pipe 6 specifically allows to carry the light radiation to the main printed circuit board even though it is located further away from the outer surface 34.

As shown in figure 1, the display 1 comprises holding means 7 fixed to the casing 3 and configured to removably maintain the light pipe 6. The holding means 7 for instance comprise a first tube of which an inside section is adapted to receive an end of the light pipe 6, the end terminating by the inlet 61, as represented in figure 1 The first tube is for instance fixed to the casing 3 such as to extend the opening 38 toward the inside of the casing 3. Said end of the light pipe 6 is then slotted in the first tube. The holding means may also comprise snap hooks.

As shown in figure 3, the display 1 also comprises a holder 8 mounted on the main printed circuit board 41. The holder 8 is configured to removably hold the light pipe 6, and more particularly the other end of the light pipe 6 terminating by the outlet 62, in front of the light sensor 5. The holder 8 for instance comprises a second tube of which an inside section is adapted to receive said end of the light pipe 6 as represented in figure 3. The second tube is for instance fixed to the main printed circuit board 41 such as to surround the light sensor 5. Said end of the light pipe 6 is then slotted in the second tube. The holder may also comprise snap hooks.

By way of variation, the light pipe may be held with respect to the casing by central portions of the light pipe, that is to say at a distance from its ends.

## Claims

1. Display (1) comprising:
- an image generation unit (2) comprising a light emitter and an auxiliary printed circuit board (22) on which the light emitter is mounted;
- a control unit (4), configured to control the image generation unit (2), and a main printed circuit board (41), distinct from the auxiliary printed circuit board (22), the control unit (4) being mounted on the main printed circuit board (41);
- a light sensor (5) adapted to provide to the control unit (4) a signal representative of a light intensity received by the light sensor (5);
- a light guide (6) configured to collect a light radiation and to guide the light radiation to the light sensor (5);
wherein the light sensor (5) is mounted on the main printed circuit board (41) and wherein the light guide (6) is a light pipe (6),
**characterised in that** the light pipe (6) is flexible.

2. Display (1) according to claim 1, wherein the light pipe (6) presents a longitudinal extension and cross-sections perpendicular to the longitudinal extension, and wherein each cross-section presents a surface comprised between 20 mm² and 50 mm².

3. Display (1) according to any one of claim 1 or 2, further comprising a casing (3) provided with an opening (38), the image generation unit (2) being located inside the casing (3), the light pipe (6) comprising an inlet (61) adapted to collect the light radiation and an outlet (62) opposed to the inlet (61) and facing the light sensor (5), the inlet (61) being arranged in the vicinity of the opening (38).

4. Display (1) according to claim 3, wherein the casing (3) comprises an outer surface (34) and wherein the outer surface (34) at least partially defines an edge of the opening (38).

5. Display (1) according to claim 3, wherein the casing (3) comprises an optical chamber (37) extending from the outer surface (34) to the image generation unit (2) for the passage of light emitted by the image generation unit (2), and wherein the opening (38) opens out into the optical chamber (37).

6. Display (1) according to any one of claims 3 to 5, further comprising holding means (7) arranged in the casing (3) and configured to removably maintain the light pipe (6) with respect to the casing (3).

7. Display (1) according to any one of claims 1 to 6, further comprising a holder (8) mounted on the main printed circuit board (41) and configured to removably maintain the light pipe (6) in front of the light sensor (5).

8. Display (1) according to any one of claims 1 to 7, further comprising a partially transparent plate configured to reflect light emitted by the image generation unit (2) towards a user.

9. Display (1) according to claim 8, wherein the partially transparent plate is a windshield of an automotive vehicle.

## Patentansprüche

1. Anzeige (1), die Folgendes umfasst:
- eine Bilderzeugungseinheit (2), die einen Lichtemitter und eine gedruckte Hilfsleiterplatte (22) umfasst, auf der der Lichtemitter montiert ist;
- eine Steuereinheit (4), die dazu ausgelegt ist, die Bilderzeugungseinheit (2) zu steuern, und eine gedruckte Hauptleiterplatte (41), die sich von der gedruckten Hilfsleiterplatte (22) unterscheidet, wobei die Steuereinheit (4) auf der gedruckten Hauptleiterplatte (41) montiert ist;
- einen Lichtsensor (5), der dazu eingerichtet ist, der Steuereinheit (4) ein Signal bereitzustellen, das eine durch den Lichtsensor (5) empfangene Lichtintensität darstellt;
- einen Lichtleiter (6), der dazu ausgelegt ist, eine Lichtstrahlung zu sammeln und die Lichtstrahlung zu dem Lichtsensor (5) zu leiten;
wobei der Lichtsensor (5) auf der gedruckten Hauptleiterplatte (41) montiert ist und wobei der Lichtleiter (6) ein Hohllichtleiter (6) ist, **dadurch gekennzeichnet, dass**
der Hohllichtleiter (6) flexibel ist.

2. Anzeige (1) nach Anspruch 1, wobei der Hohllichtleiter (6) eine Längserstreckung und Querschnitte senkrecht zur Längserstreckung aufweist, und wobei jeder Querschnitt eine Oberfläche aufweist, die zwischen 20 mm² und 50 mm² umfasst.

3. Anzeige (1) nach einem der Ansprüche 1 oder 2, ferner umfassend ein Gehäuse (3), das mit einer Öffnung (38) versehen ist, wobei sich die Bilderzeugungseinheit (2) in dem Gehäuse (3) befindet, wobei der Hohllichtleiter (6) einen Einlass (61), der dazu eingerichtet ist, die Lichtstrahlung zu sammeln, und einen Auslass (62), der dem Einlass (61) gegenüberliegt und dem Lichtsensor (5) zugewandt ist, umfasst, wobei der Einlass (61) in der Nähe der Öffnung (38) angeordnet ist.

4. Anzeige (1) nach Anspruch 3, wobei das Gehäuse (3) eine Außenfläche (34) umfasst und wobei die Außenfläche (34) zumindest teilweise einen Rand der Öffnung (38) definiert.

5. Anzeige (1) nach Anspruch 3, wobei das Gehäuse (3) eine optische Kammer (37) umfasst, die sich von der Außenfläche (34) zur Bilderzeugungseinheit (2) zum Durchlassen von durch die Bilderzeugungseinheit (2) emittiertem Licht erstreckt, und wobei die Öffnung (38) in die optische Kammer (37) mündet.

6. Anzeige (1) nach einem der Ansprüche 3 bis 5, ferner umfassend Haltemittel (7), die in dem Gehäuse (3) angeordnet und dazu ausgelegt sind, den Hohllichtleiter (6) in Bezug auf das Gehäuse (3) entfernbar zu halten.

7. Anzeige (1) nach einem der Ansprüche 1 bis 6, ferner umfassend einen Halter (8), der auf der gedruckten Hauptleiterplatte (41) montiert und dazu ausgelegt ist, den Hohllichtleiter (6) vor dem Lichtsensor (5) entfernbar zu halten.

8. Anzeige (1) nach einem der Ansprüche 1 bis 7, ferner umfassend eine teilweise transparente Platte, die dazu ausgelegt ist, durch die Bilderzeugungseinheit (2) emittiertes Licht zu einem Benutzer hin zu reflektieren.

9. Anzeige (1) nach Anspruch 8, wobei die teilweise transparente Platte eine Windschutzscheibe eines Kraftfahrzeugs ist.

## Revendications

1. Dispositif d'affichage (1), comprenant :
- une unité de génération d'image (2) comprenant un émetteur de lumière et une carte de circuit imprimé auxiliaire (22) sur laquelle l'émetteur de lumière est monté ;
- une unité de commande (4), configurée pour commander l'unité de génération d'image (2), et une carte de circuit imprimé principale (41), distincte de la carte de circuit imprimé auxiliaire (22), l'unité de commande (4) étant montée sur la carte de circuit imprimé principale (41) ;
- un capteur de lumière (5) adapté pour fournir, à l'unité de commande (4), un signal représentatif d'une intensité de lumière reçue par le capteur de lumière (5) ;
- un guide de lumière (6) configuré pour collecter un rayonnement de lumière et pour guider le rayonnement de lumière vers le capteur de lumière (5) ;
dans lequel le capteur de lumière (5) est monté sur la carte de circuit imprimé principale (41) et dans lequel le guide de lumière (6) est un tube de lumière (6), **caractérisé en ce que**
le tube de lumière (6) est flexible.

2. Dispositif d'affichage (1) selon la revendication 1, dans lequel le tube de lumière (6) présente une extension longitudinale et des sections transversales perpendiculaires à l'extension longitudinale, et dans lequel chaque section transversale présente une surface comprise entre 20 mm² et 50 mm².

3. Dispositif d'affichage (1) selon l'une quelconque de la revendication 1 ou 2, comprenant en outre un boîtier (3) pourvu d'une ouverture (38), l'unité de génération d'image (2) étant située à l'intérieur du boîtier (3), le tube de lumière (6) comprenant une entrée (61) adaptée pour collecter le rayonnement de lumière et une sortie (62) opposée à l'entrée (61) et faisant face au capteur de lumière (5), l'entrée (61) étant agencée dans le voisinage de l'ouverture (38).

4. Dispositif d'affichage (1) selon la revendication 3, dans lequel le boîtier (3) comprend une surface extérieure (34) et dans lequel la surface extérieure (34) définit au moins partiellement un bord de l'ouverture (38).

5. Dispositif d'affichage (1) selon la revendication 3, dans lequel le boîtier (3) comprend une chambre optique (37) s'étendant depuis la surface extérieure (34) jusqu'à l'unité de génération d'image (2) pour le passage de lumière émise par l'unité de génération d'image (2), et dans lequel l'ouverture (38) s'ouvre dans la chambre optique (37).

6. Dispositif d'affichage (1) selon l'une quelconque des revendications 3 à 5, comprenant en outre des moyens de retenue (7) agencés dans le boîtier (3) et configurés pour maintenir de façon amovible le tube de lumière (6) par rapport au boîtier (3).

7. Dispositif d'affichage (1) selon l'une quelconque des revendications 1 à 6, comprenant en outre un organe de retenue (8) monté sur la carte de circuit imprimé principale (41) et configuré pour maintenir de façon amovible le tube de lumière (6) devant le capteur de lumière (5).

8. Dispositif d'affichage (1) selon l'une quelconque des revendications 1 à 7, comprenant en outre une plaque partiellement transparente configurée pour réfléchir de la lumière, émise par l'unité de génération d'image (2), vers un utilisateur.

9. Dispositif d'affichage (1) selon la revendication 8, dans lequel la plaque partiellement transparente est un pare-brise d'un véhicule automobile.
